# EUROPÄISCHE PATENTSCHRIFT

(11) **EP 4 321 361 B1**
(45) Veröffentlichungstag und Bekanntmachung des Hinweises auf die Patenterteilung: **08.04.2026**
(21) Anmeldenummer: 23187823.2
(22) Anmeldetag: 26.07.2023
(51) Int. Cl.: B60J 3/00, B60Q 1/02

(54) **DACHBEREICH EINES KRAFTFAHRZEUGS**
ROOF AREA OF A MOTOR VEHICLE
ZONE DE TOIT D'UN VÉHICULE AUTOMOBILE

(30) Priorität: 09.08.2022 DE 102022120046
(43) Veröffentlichungstag der Anmeldung: 14.02.2024
(73) Patentinhaber: Daimler Truck AG, 70771 Leinfelden-Echterdingen (DE)
(72) Erfinder: Schumacher, Eric, 70771 Leinfelden-Echterdingen (DE); Kaufmann, Oliver, 70771 Leinfelden-Echterdingen (DE)
(74) Vertreter: JENSEN & SON

(56) Entgegenhaltungen:
- DE-B3- 102021 123 511
- US-A- 5 836 640
- US-B1- 6 530 620

## Beschreibung

Die Erfindung betrifft einen Dachbereich eines Kraftfahrzeugs, insbesondere eines Nutzfahrzeugs wie LKW oder Omnibusse, gemäß dem Oberbegriff des Patentanspruches 1.

Aus der DE 34 02 824 A1 ist ein Nutzfahrzeug entnehmbar, bei dem in einem Dachbereich an den beiden vorderen, oberen Ecken des Fahrerhauses Zusatzscheinwerfer angeordnet sind. Die oberen Ecken des Fahrerhauses weisen höckerartige Aufnahmen auf, in denen die Zusatzscheinwerfer zurückversetzt angeordnet sind. Die Aufnahmen mit den Scheinwerfern bilden einen relativ großen Luftwiderstand zum anströmenden Fahrtwind und erzeugen verstärkt Turbulenzen, die den Vortrieb des Fahrzeugs hemmen und den Energieverbrauch für den Antrieb des Fahrzeugs deutlich erhöhen.

Weiterhin ist aus der US 5 836 640 A ist ein Nutzfahrzeug mit Zusatzscheinwerfern bekannt, die in eine außenseitige Sonnenblende des Nutzfahrzeugs integriert sind. Hierbei ist die Streuscheibe des jeweiligen Scheinwerfers separat zum Scheinwerfergehäuse am Blendenkörper der Sonnenblende befestigt und deckt die zugewandte Öffnung des ebenfalls am Blendenkörper befestigten Gehäuses ab.

Der Erfindung liegt die Aufgabe zugrunde, einen gattungsgemäßen Dachbereich eines Kraftfahrzeugs derart weiterzubilden, dass dessen Luftwiderstand minimiert und damit der Energieverbrauch für den Fahrzeugantrieb reduziert wird.

Die Aufgabe ist erfindungsgemäß durch die Merkmale des Patentanspruches 1 gelöst.

Die Erfindung geht von einem Dachbereich eines Kraftfahrzeugs, insbesondere eines Nutzfahrzeugs aus, der mit einem zumindest einem Zusatzscheinwerfer ausgerüstet ist. Dieser besitzt ein zum Fahrzeugbug hin offenes Gehäuse, in dem zumindest eine Leuchte angeordnet ist. Die Gehäuseöffnung ist mittels einer Streuscheibe frontal abgedeckt.

Aufgrund dessen, dass der Dachbereich erfindungsgemäß eine Sonnenblende aufweist, die sich über einen oberen Abschnitt der Außenseite der Windschutzscheibe des Kraftfahrzeugs erstreckt und in der der zumindest eine Zusatzscheinwerfer aufgenommen ist, wird durch die Integration der Luftwiderstand reduziert. Für die Größe des Luftwiderstands sind daher nur noch die Konturen der Sonnenblende bestimmend und nicht zusätzlich die von separaten Zusatzscheinwerfern. Die Sonnenblende weist zudem zumindest eine Durchtrittsöffnung auf, in der die Streuscheibe des jeweiligen Scheinwerfers flächenbündig angeordnet ist. Durch die dadurch erreichte Parallelität der Anströmflächen der Sonnenblende und Streuscheibe sowie deren gleichzeitige Anströmung wird eine gleichförmige und wenig diffuse Luftabweisung erreicht, wodurch der Luftwiderstand und damit der Energieverbrauch des Fahrzeugantriebs reduziert wird.

Gemäß der Erfindung bildet die Streuscheibe die Vorderseite einer Abdeckhaube, die mit dem Scheinwerfergehäuse dichtend verbunden und unter Ausbildung eines umlaufenden Spaltes innerhalb der Durchtrittsöffnung der Sonnenblende angeordnet ist. Durch die Integrierung der Streuscheibe in eine Abdeckhaube wird die Befestigung am Scheinwerfergehäuse merklich erleichtert. Aufgrund des Spaltes und der Verbindung der Abdeckhaube mit dem Scheinwerfergehäuse wird die Justierung des Gehäuses ermöglicht.

Gemäß der Erfindung ist die Vorderseite der Sonnenblende schräg -von hinten oben nach vorne unten fallend- ausgebildet, wodurch der Luftwiderstand signifikant weiter verringert wird.

In einer bevorzugten Ausführungsform der Erfindung ist die Streuscheibe mit geringem Spiel in die Durchtrittsöffnung eingepasst. Hierdurch werden die Störkonturen für eine laminare Luftströmung nahezu ausgeschaltet und damit der Luftwiderstand und der Energieverbrauch weiter abgesenkt.

Verstärkt wird der Luftwiderstand reduzierende Effekt der Erfindung noch die weitere bevorzugten Ausführungsform der Erfindung, dass die Sonnenblende sich in Querrichtung über die gesamte Windschutzscheibe erstreckt, wodurch die Gleichförmigkeit der Anströmung maximiert und der Energieverbrauch aufgrund der damit verbundenen Reduzierung des Luftwiderstandes weiter reduziert wird.

In einer bevorzugten Ausführungsform der Erfindung ist in der Durchtrittsöffnung ein Versteifungsrahmen eingebracht und am Öffnungsrand befestigt. Hierbei wird der Spalt zwischen Öffnungsrand der Durchtrittsöffnung und er dem Streuscheibenumfang weiter reduziert, was eine Luftverwirbelung unterbindet und damit den Energieverbrauch verringert.

In einer bevorzugten Ausführungsform der Erfindung ist die zumindest eine Durchtrittsöffnung eckig, insbesondere weitgehend rechteckig ausgebildet, was die Handhabbarkeit des Scheinwerfers in der Montage vereinfacht und insbesondere die Ausrichtung der Streuscheibe in der Durchtrittsöffnung erleichtert. Die Durchtrittsöffnung kann jedoch auch jede andere Form annehmen, beispielsweise kreisrund oder elliptisch.

Nachfolgend ist die Erfindung anhand eines in den Zeichnungen dargestellten Ausführungsbeispiels näher erläutert.

Dabei zeigen:
- Fig. 1: In einer perspektivischen Ansicht einen Ausschnitt der Front eines Nutzfahrzeugs mit einem erfindungsgemäßen Dachbereich,
- Fig. 2: In einer perspektivischen Ansicht eine Sonnenblende des erfindungsgemäßen Dachbereichs aus Fig. 1,
- Fig. 3: In einer perspektivischen Schnittdarstellung die Sonnenblende aus Fig. 2.

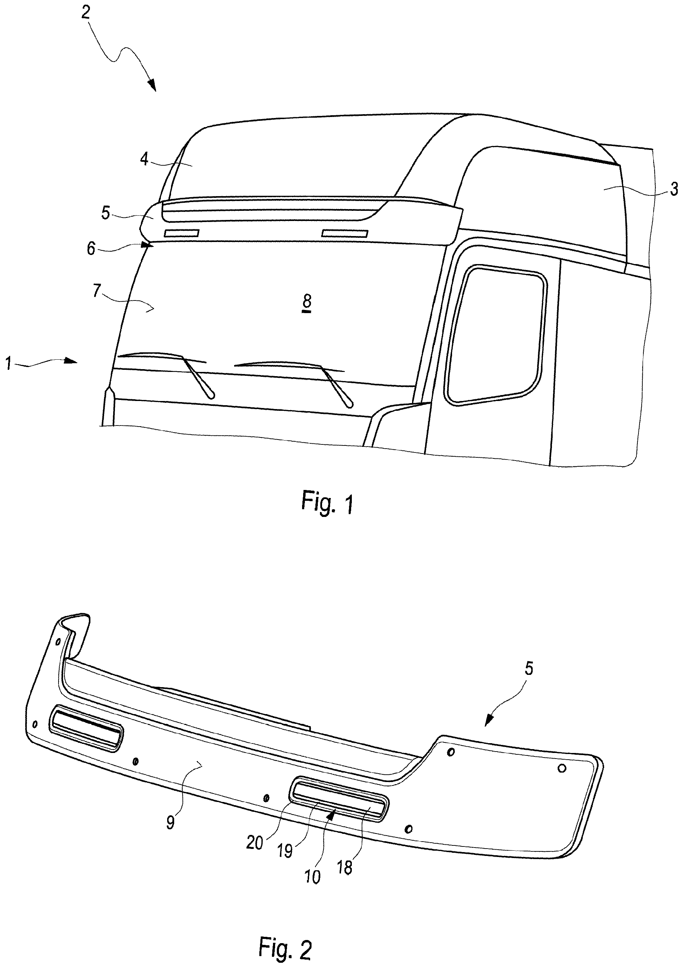

In Fig. 1 ist eine Front 1 eines Nutzfahrzeugs 2 ersichtlich, die einen haubenförmigen Dachbereich 3 aufweist, der stirnseitig mit einem aerodynamisch geformten Windleitblech 4 abschließt. An das Windleitblech 4 schließt sich nach unten eine Sonnenblende 5 an, die sich über einen oberen Abschnitt 6 der Außenseite 7 einer Windschutzscheibe 8 des Nutzfahrzeugs 2 erstreckt und am Rohbau des Dachbereichs 3 mittels Haltern (hier nicht gezeigt) befestigt ist. Die Sonnenblende 5 verläuft dabei vorliegend in Querrichtung des Nutzfahrzeugs 2 über die gesamte Windschutzscheibe 8.

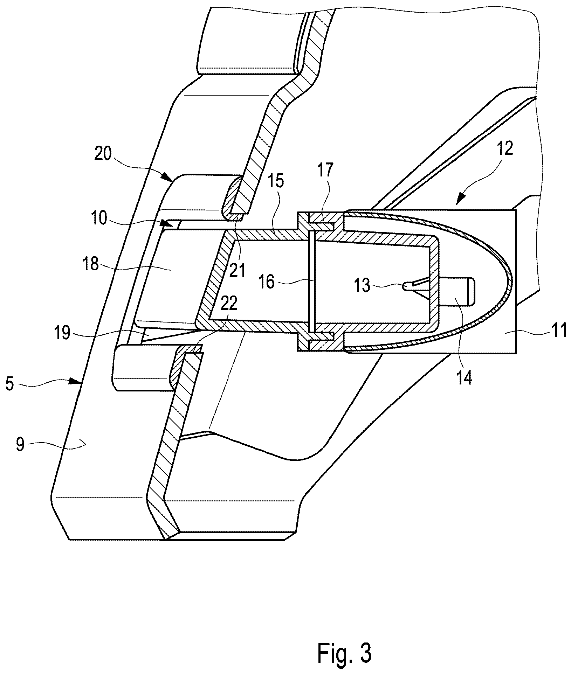

Wie in den Fig. 2 und 3 verdeutlicht ist, ist die Vorderseite 9 der Sonnenblende 5 schräg -von hinten oben nach vorne unten fallend- ausgebildet ist. Die Sonnenblende 5 weist spiegelsymmetrisch zu ihrer Mitte zwei längliche Durchtrittsöffnungen 10 auf, die weitgehend rechteckig ausgebildet sind und horizontal, also quer zur Abschrägung der Vorderseite 9 verlaufen. Es ist jedoch denkbar, dass die Sonnenblende 5 nur eine zentrale Durchtrittsöffnung 10 oder mehrere aufweist, welche entlang der Sonnenblende 5 verteilt angeordnet sind.

Auch kann die jeweilige Durchtrittsöffnung 10 je nach Designwunsch oder Ausleuchtung der Umgebung, insbesondere der Straße, eine andere abweichende eckige Form aufweisen, oder beispielsweise längs der Abschrägung der Vorderseite 9 verlaufen.

An den Haltern der Sonnenblende 5 ist ein Scheinwerfergehäuse 11 eines Zusatzscheinwerfers 12 angebracht, welches zum Fahrzeugbug hin offen ist und in dem eine oder mehrere Leuchten 13 unter Bildung eines elektrischen Kontaktes in eine entsprechende Fassung 14 eingebracht sind. Die Leuchten 13 sind bevorzugt als LED ausgebildet. Das Scheinwerfergehäuses 11 ist mit einer der Form der Durchtrittsöffnung 10 angepassten Abdeckhaube 15 topfförmigen Querschnitts fluiddicht verbunden, die die Öffnung 16 des Gehäuses 11 verschließt. Die Abdeckhaube 15 kann dabei mit dem Gehäuse 11 verschraubt oder mittels einer Clipsverbindung 17 verbunden sein. Die Abdeckhaube 15 besteht aus einem transparenten oder transluzenten Material und kann auch eingefärbt sein.

Die Vorderseite der Abdeckhaube 15 bildet eine Streuscheibe 18, die einstückig mit dieser verbunden ist. Denkbar ist jedoch alternativ auch, dass die Streuscheibe 18 ein separates Bauteil ist, das an der Abdeckhaube 15 befestigt ist. Die in ihrem Verlauf der Abschrägung der Vorderseite 9 der Sonnenblende 5 nachempfundene Streuscheibe 18 ist innerhalb der Durchtrittsöffnung 10 der Sonnenblende 5 flächenbündig unter Ausbildung eines umlaufenden Spaltes 19 angeordnet. In die Durchtrittsöffnung 10 ist ein formentsprechender Versteifungsrahmen 20 eingesteckt, der an der Vorderseite 9 der Sonnenblende 5 anliegt und mit einem Zug 21 den Öffnungsrand 22 der Durchtrittsöffnung 10 einfasst, vorzugsweise hintergreift. Der Versteifungsrahmen 20 ist in der Durchtrittsöffnung 10 befestigt, beispielsweise durch Einpressen oder Einclipsen. Hierbei wird Spalt 19 aerodynamisch vorteilhaft verkleinert. Die Streuscheibe 18 ist damit mit geringem Spiel in die Durchtrittsöffnung 10 eingepasst. Das Spiel, bzw. der noch verbliebene Spalt 19 ist noch so dimensioniert, dass eine Justierung des Gehäuses, insbesondere in Höhen- und/oder Querrichtung möglich ist.

## Patentansprüche

1. Dachbereich (3) eines Kraftfahrzeugs (2), insbesondere eines Nutzfahrzeugs, mit einem zumindest einem Zusatzscheinwerfer (12), welcher ein zum Fahrzeugbug hin offenes Gehäuse (11), zumindest eine im Gehäuse (11) angeordnete Leuchte (13) und eine die Gehäuseöffnung (16) frontal abdeckende Streuscheibe(18) beinhaltet, wobei der Dachbereich (3) eine Sonnenblende (5) aufweist, die sich über einen oberen Abschnitt (6) der Außenseite (7) der Windschutzscheibe (8) des Kraftfahrzeugs (2) erstreckt und in der der zumindest eine Zusatzscheinwerfer (12) aufgenommen ist, wobei die Sonnenblende (5) zumindest eine Durchtrittsöffnung (10) besitzt, in der die Streuscheibe (18) des jeweiligen Scheinwerfers (12) flächenbündig angeordnet ist, und wobei die Vorderseite (9) der Sonnenblende (5) schräg von hinten oben nach vorne unten fallend ausgebildet ist,
**dadurch gekennzeichnet, dass**
die Streuscheibe (18) die Vorderseite einer Abdeckhaube (15) bildet, die mit dem Scheinwerfergehäuse (11) dichtend verbunden und unter Ausbildung eines umlaufenden Spaltes (19) innerhalb der Durchtrittsöffnung (10) der Sonnenblende (5) angeordnet ist.

2. Dachbereich nach Anspruch 1,
**dadurch gekennzeichnet, dass**
die Sonnenblende (5) sich in Querrichtung über die gesamte Windschutzscheibe erstreckt.

3. Dachbereich nach einem der Ansprüche 1 bis 3,
**dadurch gekennzeichnet, dass**
die zumindest eine Durchtrittsöffnung (10) eckig, insbesondere rechteckig ausgebildet ist.

4. Dachbereich nach einem der Ansprüche 1 bis 4,
**dadurch gekennzeichnet, dass**
die Streuscheibe (18) mit geringem Spiel in die Durchtrittsöffnung (10) eingepasst ist.

5. Dachbereich nach einem der Ansprüche 1 bis 5,
**dadurch gekennzeichnet, dass**
in der Durchtrittsöffnung (10) ein Versteifungsrahmen (20) eingebracht und am Öffnungsrand (22) befestigt ist.

## Claims

1. A roof area (3) of a motor vehicle (2), in particular of a commercial vehicle, having at least one auxiliary headlight (12) that comprises a housing (11) open towards the front of the vehicle (11), at least one lamp (13) that is arranged inside the housing (11) and a diffusing lens (18) that covers the front of the housing opening (16), the roof area (3) having a sun visor (5) that extends over an upper portion (6) of the outside (7) of the windscreen (8) of the motor vehicle (2) and is received in the at least one auxiliary headlight (12), the sun visor (5) having at least one through-opening (10) in which the diffusing lens (18) of the headlight (12) is flush mounted, and the front side (9) of the sun visor (5) being designed to slope down obliquely from top rear to bottom front,
**characterised in that**
the diffusing lens (18) forms the front side of a covering cap (15) that is connected to the headlight housing (11) so as to make a seal and arranged inside the through-opening (10) of the sun visor (5) so as to form a circumferential gap (19).

2. A roof area in accordance with claim 1,
**characterised in that**
the sun visor (5) extends transversely over the entire windscreen.

3. A roof area in accordance with any one of claims 1 to 3,
**characterised in that**
the at least one through-opening (10) is of angular, in particular of rectangular, design.

4. A roof area in accordance with any one of claims 1 to 4,
**characterised in that**
the diffusing lens (18) is fitted into the through-opening (10) with a little play.

5. A roof area in accordance with any one of claims 1 to 5,
**characterised in that**
a reinforcing frame (20) is introduced into the through-opening (10) and fixed to the edge (22) of the opening.

## Revendications

1. Zone de toit (3) d'un véhicule automobile (2), en particulier un véhicule utilitaire, comprenant au moins un phare supplémentaire (12), lequel comprend un boîtier (11) ouvert vers l'avant du véhicule, au moins un éclairage (13) disposé dans le boîtier (11) et une lentille de diffusion (18) recouvrant à l'avant l'ouverture (16) du boîtier, la zone de toit (3) comportant un pare-soleil (5), qui s'étend sur une partie supérieure (6) de la face extérieure (7) du pare-brise (8) du véhicule automobile (2) et dans laquelle est logé au moins un phare supplémentaire (12), le pare-soleil (5) comportant au moins une ouverture de passage (10) dans laquelle la lentille de diffusion (18) du phare (12) respectif est disposée à fleur, et la face avant (9) du pare-soleil (5) est inclinée de l'arrière vers l'avant, **caractérisée en ce que** la lentille de diffusion (18) forme la face avant d'un capot de protection (15) qui est relié de manière étanche au boîtier (11) du phare et qui est disposé à l'intérieur de l'ouverture de passage (10) du pare-soleil (5) en formant une fente périphérique (19).

2. Zone de toit selon la revendication 1, **caractérisée en ce que** le pare-soleil (5) s'étend transversalement sur toute la largeur du pare-brise.

3. Zone de toit selon l'une quelconque des revendications 1 à 3, **caractérisée en ce que** l'au moins une ouverture de passage (10) est carrée, en particulier rectangulaire.

4. Zone de toit selon l'une quelconque des revendications 1 à 4, **caractérisée en ce que** la lentille de diffusion (18) est ajustée avec un faible jeu dans l'ouverture de passage (10).

5. Zone de toit selon l'une quelconque des revendications 1 à 5, **caractérisée en ce qu'**un cadre de renfort (20) est inséré dans l'ouverture de passage (10) et fixé au bord de l'ouverture (22).
